(19) Europäisches Patentamt
European Patent Office
Office européen des brevets

(11) EP 0 948 904 B1

(12) FASCICULE DE BREVET EUROPEEN

(45) Date de publication et mention de la délivrance du brevet:
**17.09.2003 Bulletin 2003/38**

(51) Int Cl.[7]: **A23L 1/10**, A23L 1/0522, A21D 6/00

(21) Numéro de dépôt: **99400880.3**

(22) Date de dépôt: **09.04.1999**

# (54) Procédé d'obtention d'ingrédients fonctionnels à partir de farine de mais cireux, ingrédients obtenus et leurs applications

Verfahren zur Herstellung von funktionellen Bestandteilen aus wachsartigem Maismehl, danach hergestellte Produkte und ihre Verwendungen

Process for making functional ingredients from waxy cornflour, ingredients obtained and their uses

(84) Etats contractants désignés:
**AT BE CH CY DE DK ES FI FR GB GR IE IT LI LU MC NL PT SE**

(30) Priorité: **10.04.1998 FR 9804580**

(43) Date de publication de la demande:
**13.10.1999 Bulletin 1999/41**

(73) Titulaire: **Ulice S.A.**
**63204 Riom Cedex (FR)**

(72) Inventeurs:
- **Despre, Denis**
  **63200 Riom (FR)**
- **Fauzan, Nicolas**
  **63100 Clermont-Ferrand (FR)**
- **Messager, Arnaud**
  **63200 Riom (FR)**

(74) Mandataire: **Breese, Pierre**
**Breese - Majerowicz - Simonnot**
**3, avenue de l'Opéra**
**75001 Paris (FR)**

(56) Documents cités:
**EP-A- 0 105 787**
**EP-A- 0 321 060**
**WO-A-96/22311**
**WO-A-97/29647**
**FR-A- 700 337**
**GB-A- 1 327 134**
**US-A- 3 133 818**
**US-A- 3 404 986**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 948 904 B1

Printed by Jouve, 75001 PARIS (FR)

## Description

La présente invention se rapporte au domaine agroalimentaire et concerne des ingrédients céréaliers hautement fonctionnels, notamment des farines céréalières hautement fonctionnelles, pouvant se substituer aux amidons natifs et modifiés utilisés pour la préparation de produits alimentaires.

L'invention a également pour objet la préparation de ces farines et leur utilisation pour la fabrication de produits alimentaires.

Les amidons sont utilisés en tant que gélifiants mais leurs principales propriétés sont leur pouvoir épaississant, texturant, liant et stabilisant. Ils rentrent dans la composition de nombreux produits alimentaires, comme des soupes et sauces, des plats cuisinés, des produits laitiers, des crèmes desserts, etc...

A l'état natif, l'amidon est totalement insoluble. Un traitement hydrothermique conduisant à un gonflement irréversible des granules et à leur solubilisation est donc nécessaire pour que les propriétés puissent se révéler. L'amidon est composé de deux polymères de glucose, l'amylose et l'amylopectine, dont le ratio modifie le comportement en solution. Des amidons particulièrement riche en amylose (70% amylose) forment, après cuisson suivie d'une étape de refroidissement, un gel lié à la réorganisation des chaînes d'amylose linéaires. Ce gel n'est pas stable et après plusieurs jours, le phénomène de synérèse (exsudation d'eau) est observé. Ce problème limite l'utilisation d'amidons riche en amylose.

Les amidons cireux, aussi désignés ci-après "waxy", car ils sont composés de 100% d'amylopectine, sont utilisés industriellement car ils présentent une tendance à la rétrogradation limitée et donc garantissent une texture homogène au cours du temps.

Certaines utilisations des amidons cireux, intègrent dans leur procédé de fortes contraintes technologiques. Les granules d'amidon peuvent alors ne pas résister à certaines contraintes comme la chaleur, le cisaillement, l'acidité et le cycle congélation/décongélation.

Pour pallier à ce manque de résistance, des modifications chimiques de type réticulation et/ou stabilisation sont réalisées.

La réticulation vise à introduire des liaisons chimiques pour augmenter la cohésion interne de la granule et garantir une plus grande résistance à la chaleur, au cisaillement et à l'acidité.

La stabilisation vise à greffer des macromolécules créant des répulsions interchaînes et évitant la réassociation des chaînes, empêchant gélification et synérèse.

Les amidons modifiés utilisés dans les produits alimentaires sont aussi bien réticulés que stabilisés. Ces amidons chimiquement modifiés présentent de très bonnes fonctionnalités mais sont soumis à une réglementation européenne spécifique prescrivant l'utilisation de la mention "ADDITIF de la série E1400" (par exemple E1422), alors que la déclaration d'étiquetage des amidons natifs reste "INGREDIENT".

La présente invention a pour but d'offrir une farine céréalière comprenant des granules d'amidon mais présentant une meilleure résistance à la température, aux faibles pH et cisaillements, ainsi qu'une meilleure texture que les amidons waxy natifs.

En effet, les amidons waxy natifs sont peu utilisés industriellement du fait des textures élastiques et "glaireuse". Or, les farines, objet de l'invention, comportent de l'amidon, de l'ordre d'environ 80%, mais également des zéines et d'autres composés qui participent conjointement aux textures développées. Il en résulte des empois qui présentent très peu ce caractère "glaireux".

En outre, les farines de l'invention présentent des fonctionnalités équivalentes à celles des amidons modifiés pour certaines applications, et présentent l'avantage de bénéficier d'une déclaration d'étiquetage d'INGRÉDIENT et non d'ADDITIF, ce qui offre un avantage remarquable vis-à-vis de l'accueil du produit par les consommateurs.

Des farines fonctionnelles et leur procédé de préparation sont décrits dans l'art antérieur. Le brevet Américain publié sous le No. 1 327 134 décrit un procédé vapeur dont le temps de traitement est de l'ordre de 10 minutes pour traiter thermiquement des farines et inhiber les amylases. Ce procédé ne comprend pas d'étape de séchage et est mis en oeuvre avec des températures importantes et sans pression. Le brevet Américain publié sous le No. 4 303 451 enseigne une méthode de traitement thermique appliquée aux amidons de maïs pour préparer des amidons maïs waxy prégélatinisés et améliorés en texture et goût destinés à être utilisés dans l'industrie alimentaire, mais il s'agit d'un procédé spécifique qui ne concerne que les amidons et propose des temps de traitement supérieur à 15 minutes. La demande de brevet Européen publiée sous le No. 105 787 rapporte une méthode de gélatinisation partielle de farine qui est réalisée par autoclavage en plateaux suivie d'une étape de séchage, et qui concerne principalement les farines de blé; à la différence du procédé de l'invention décrit ci-après, cette méthode ne comprend pas d'humidification simultanée et non préalable à la cuisson

Par ailleurs, les demandes de brevet internationales PCT publiées sous les No. WO96/03891 et No. WO96/22311 s'intéressent à des procédés d'inhibition thermique de farines et d'amidons, comprenant une étape d'ajustement du pH à une valeur supérieure ou égale à 7 avec une base de type phosphate de sodium ou carbonate de sodium, suivie d'une étape de déshydratation de la farine ou amidon à moins de 1% tout en conservant l'intégralité des granules. Cette modification thermique est réalisée à pH neutre ou légèrement alcalin en associant des températures faibles de l'ordre de 125°C. Il est également indiqué que pour des farines, le traitement visant à obtenir le même niveau d'inhibition est réalisé à des températures et des durées de process plus faibles. A la différence du procédé de l'invention décrit ci-après, ces procédés sont fondés sur un ajustement du pH neutre/basique, qui ne devrait pas permettre aux produits obtenus de bénéficier d'une déclaration d'INGRÉDIENT, car ceux-ci pourraient contenir des résidus de sels minéraux résultant de l'alcalinisation. En outre, l'ajustement du pH se fait en milieu en liquide, technique usuelle en amidonerie/extraction, alors que le procédé de l'invention maintient le matériel à l'état pulvérulent ($H_2O$ < 25%).

La présente invention se rapporte à un procédé de préparation d'une farine fonctionnelle simple de mise en oeuvre et permettant d'obtenir une farine bénéficiant d'une déclaration d'INGRÉDIENT.

Ce procédé est du type comprenant la préparation, à partir de grains de maïs waxy, d'une farine de départ de granulométrie définie et contenant le moins de matière grasse possible pour en garantir la neutralité, et est caractérisé en ce que :

- l'on soumet ladite farine à un traitement hydrothermique puis à un séchage, et
- l'on broie modérément et tamise la farine issue de l'étape précédente.

La préparation de farine de granulométrie définie à partir de grains de maïs waxy peut être réalisée par toute méthode connue de l'homme du métier, comme les techniques de séparation utilisées dans l'industrie semoulière. On préfère utiliser dans le procédé de l'invention une farine qui a subit un broyage progressif via des cylindres, éventuellement refroidi, garantissant un endommagement minimum des granules d'amidon, de granulométrie moyenne, dénommée D50 comprise entre 75µ et 200µ et dont le taux de matière grasse est inférieur à 1,5% / matière sèche.

Le traitement hydrothermique et le séchage selon le procédé de l'invention constituent une prégélatinisation partielle permettant de modifier la structure cristalline de l'amidon de façon à développer des viscosités supérieures compétitives à certains amidons modifiés. Les étapes de traitement hydrothermique et de séchage selon le procédé de l'invention sont caractérisées en ce que l'on apporte à la farine de l'eau ou de la vapeur et de l'énergie thermique pour obtenir un degré de gélatinisation de l'amidon compris entre 20 et 95 %, par exemple entre 25 et 85% et de préférence entre 30 et 70% en un temps très court, avantageusement inférieur ou égal à 5 minutes. Les étapes de traitement hydrothermique et de séchage selon le procédé de l'invention, sont réalisées à des températures comprises entre 210 et 250°C et de préférence de l'ordre de 215, 220 ou 230°C, pendant une durée inférieure à environ 5 minutes,

Différents matériels et méthodes peuvent être mis en oeuvre pour les étapes de traitement hydrothermique et de séchage du procédé de l'invention. On peut citer par exemple, le cuiseur extrudeur présentant une forte dégradation de l'amidon, les tambours sécheurs, le jet cooking où la cuisson et le séchage sont simultanés et l'atomisation d'un empois d'amidon. Parmi ceux-ci, on préfère une technique habituellement utilisée pour débactériser des sons, des germes et des farines, et pour sécher et prégélatiniser des farines, basée sur la mise en suspension du produit en haute turbulence dans un courant d'air chauffé et en contact permanent avec une surface également chauffée.

Un dispositif pour la mise en oeuvre de cette technique comporte deux parties, un cuiseur et un sécheur, chacun constitué d'un cylindre horizontal où une hélice horizontale permet de maintenir le produit contre les parois par centrifugation. Un circuit d'huile thermique assure le chauffage des cylindres grâce à un manteau coaxial. Le cuiseur peut recevoir de l'eau et/ou vapeur et divers autres additifs. Ainsi sous l'effet de l'eau associé à l'apport d'énergie thermique, les propriétés rhéologiques (viscosité, capacité d'absorption...) de l'amidon sont modifiées. Le produit est ensuite transféré dans le sécheur, où de l'air chauffé via un échangeur de chaleur est injecté dans le cylindre. Le produit est alors séché par conduction (parois chauffées) et par convection (air chauffé). Les principaux paramètres à réguler sont les débits matières et eau, les temps de séjour et les températures utilisées.

L'étape de traitement hydrothermique suivie de l'étape de séchage du procédé de l'invention sont donc avantageusement réalisées par mise en suspension de la farine en haute turbulence dans un courant d'air chauffé et en contact permanent avec une surface également chauffée, en apportant de l'eau ou de la vapeur, avec les principaux paramètres suivants :

- un débit de matière (farine de l'étape 2) de l'ordre de 100 à 200 Kg/h;
- un débit eau calculé pour apporter de l'ordre de 2 à 20% d'eau par rapport au débit matière;
- des températures de cuisson et de séchage comprises entre 210 et 250°C et de préférence de l'ordre de 215, 220 ou 230°C;
- une durée de traitement hydrothermique et de séchage inférieure à environ 5 minutes.

La dernière étape du procédé de l'invention consiste à broyer modérément et tamiser pour obtenir une granulométrie moyenne, dénommée D50 comprise entre 75µ et 200µ et de préférence entre 115µ et 125µ.

L'invention concerne également une farine, par exemple blanche ou jaune, obtenue par le procédé ci-dessus.

En effet, le procédé de l'invention est remarquable en ce qu'il permet d'obtenir une farine blanche ou jaune présentant un degré de gélatinisation compris entre 20 et 95%, par exemple entre 25 et 85% et de préférence entre 30 et 70%, une humidité comprise entre 4 et 11%, une D50 comprise entre 75µ et 200µ et de préférence entre 115µ et 125µ et développant une viscosité à chaud entre 700 et 900RVU. Le degré de gélatinisation est déterminé par le rapport des enthalpies mesurés par DSC selon la publication de P. Chinachoti et al. (Journal of Food Science, vol. 55, no. 2, 1990, pages 543 et suivantes). Le degré de gélatinisation est calculé par DSC (Differentiel Scanning Calorimeter) dont le principe est basé sur la mesure d'énergie d'un changement d'état induit par une variation de température.

Le degré de gélatinisation est calculé selon l'équation suivante :

$$DG = 1 - \frac{\text{Enthalpie produit traité thermiquement}}{\text{Enthalpie produit natif}} \times 100$$

Les caractéristiques de viscosité sont mesurées par RVA (4 g de farine + 25 g d'eau).

La présente invention est le résultat de travaux de recherche visant à mettre au point un-procédé permettant de modifier physiquement les granules d'amidons de façon à leur conférer de nouvelles fonctionnalités. Mais ces travaux de recherche ont également visé à définir des choix variétaux sur des critères liés à la composition d'amidons (amylose /amylopectine). La présente invention concerne donc également l'utilisation dans le procédé ci-dessus de variétés spécifiques notamment de maïs waxy (100% amylopectine) obtenues par sélection ou biotechnologie et de couleurs différentes.

En outre, l'invention concerne la combinaison du procédé tel que décrit précédemment avec des variétés végétales déterminées qui permet d'obtenir des produits avantageux.

En effet, le choix de grains de maïs waxy, de colorations variables entre blanc et jaune et de structure denté ou corné denté permet d'optimiser le procédé de l'invention.

Les grains waxy sont obtenus par sélection classique ou par biotechnologie. Le caractère waxy correspond à une mutation de la GBSS, enzyme responsable de la synthèse de l'amylose. Une telle mutation *(wx1)* permet ainsi l'obtention d'amidon composé exclusivement d'amylopectine. Les techniques de sélection visent à introduire dans chacun des parents la mutation waxy par croisement et obtenir un hybride F1. Les biotechnologies permettent l'obtention du même phénotype dans un temps plus court. La modification du gène touche également la GBSS et peut être réalisée par technologie antisens. Le gène modifié est introduit dans la cellule végétale par les techniques habituelles de transformation utilisant par exemple Agrobacterium tumefaciens ou la biolistique. Après transformation, plusieurs backcross peuvent être nécessaires pour obtenir une plante exploitable. Le caractère blanc correspond à une mutation sur le gène (*y1*) impliqué dans la biosynthèse du carotène. Des grains de maïs comportant les 2 mutations waxy (w1) et blanc (y1) sont également sélectionnés puis croisés pour obtenir un hybride F1 présentant le phénotype recherché. Des variétés dentés (albumen essentiellement farineux) ou cornés dentés résultant de croisements antérieurs ont été choisies comme support de ces mutations. L'invention considère principalement les 3 types de maïs waxy du tableau 1 ci-dessous.

Tableau 1

| caractéristiques "amidon" | technologie utilisée | sous espèces et types | couleur |
|---|---|---|---|
| waxy | sélection | corné denté | jaune |
| waxy | sélection | denté | blanche |
| waxy | biotechnologie | corné denté | jaune |

L'invention a donc également pour objet, le procédé décrit précédement dans lequel la farine de départ est préparée à partir de grains d'une ou plusieurs variétés de maïs waxy contenant 100% d'amylopectine. On préfère plus particulièrement les variétés de maïs waxy dentés et/ou cornés dentés, de préférence des variétés blanches à jaunes.

Les farines hautement fonctionnelles, ci-après désignées farine "HF" de l'invention, peuvent être utilisées dans l'industrie alimentaire. En effet, ces farines possèdent d'excellentes propriétés viscosifiantes, liantes, sans rétrogradation lors du refroidissement. Elles présentent également une synérèse limitée du fait de l'absence de gel, un très bon comportement vis-à-vis de la température, des faibles pH ainsi que pour de faibles niveaux de cisaillement. Elles peuvent donc selon les applications se substituer soit aux amidons natifs soit aux amidons modifiés. Ces farines "HF" présentent les avantages suivants selon les applications rapportées dans le tableau 2 ci-dessous.

Tableau 2

| Applications des farines de l'invention | Fonctionnalités et avantages |
|---|---|

Tableau 2 (suite)

| | |
|---|---|
| Snacks et autres produits extrudés | Augmentation de l'expansion |
| Biscuiterie | Diminution de la fèle et amélioration de la croustillance |
| Panification et viennoiserie | Amélioration du moelleux et de la conservation et diminution de la rétrogradation |
| Charcuterie et aliments pour animaux familiers | Amélioration de la tenue et texture |
| Sauces et plats cuisinés | Amélioration de la texture et de la perception organoleptique |
| Produits laitiers | Viscosité et résistance aux contraintes technologiques |
| Batters, pates à crèpe, à frire, etc... | Amélioration de l'adhésivité et diminution de la fèle |

L'invention concerne donc également l'utilisation de la farine "HF", comme ingrédient en particulier comme produit de substitution de farines non traitées et/ou d'amidons natifs et/ou modifiés, pour la fabrication de produits alimentaires, et plus particulièrement pour la fabrication de snacks et autres produits extrudés, de produits alimentaires de biscuiterie, de panification et de viennoiserie, de charcuterie, d'aliments pour animaux, de sauces et plats cuisinés, de produits laitiers, de beurres, etc....

Comme indiqué dans le tableau 1 ci-dessus, l'utilisation des farines fonctionnelles de l'invention permet d'obtenir :

- des snacks et autres produits extrudés présentant une amélioration de l'expansion;
- des produits de biscuiterie où la fèle est diminuée et la croustillance des biscuits ou crackers est améliorée;
- des produits de panification et de viennoiserie où le moelleux du pain est amélioré, la rétrogradation est diminuée et la conservation est augmentée;
- des produits de charcuterie et des aliments pour animaux dont la tenue et la texture sont améliorées, ce qui constitue un avantage pour des traitements de stérilisation;
- des sauces, plats cuisinés et produits laitiers où l'on peut obtenir, en léger surdosage de farine, des fonctionnalités de type résistance à des contraintes technologiques : cisaillement, acidité et traitement thermique identique aux amidons modifiés tout en conservant une déclaration "INGRÉDIENT";
- des produits "batters" et autres produits d'enrobage où l'adhésivité de la chapelure est améliorée et la fèle est diminuée lors de la conservation.

L'invention a donc encore pour objet des produits alimentaires tels que snacks et autres produits extrudés, des produits alimentaires de biscuiterie, de panification, de viennoiserie, de charcuterie, des aliments pour animaux, des sauces et plats cuisinés, des produits laitiers, des beurres, à base de farine selon l'invention.

L'invention se rapporte également à un dispositif pour la réalisation des étapes de traitement hydrothermique et de séchage, caractérisé en ce qu'il comprend :

- un cuiseur constitué d'un cylindre horizontal où une hélice horizontale permet de maintenir le produit contre les parois par centrifugation, pouvant recevoir de l'eau et/ou de la vapeur;
- un sécheur constitué d'un cylindre horizontal où une hélice horizontale permet de maintenir le produit contre les parois par centrifugation et ou de l'air chauffé via un échangeur de chaleur est injecté;
- un circuit, comme un circuit d'huile thermique assurant le chauffage des cylindres grâce à un manteau coaxial.

D'autres exemples et avantages de l'invention apparaîtront dans les exemples qui suivent concernant le procédé de l'invention et les farines obtenues dénommées farines "HF" et leurs utilisations.

Exemple 1 : Obtention d'une farine "HF".

Choix d'une farine issue d'une variété de maïs waxy de granulométrie centrée sur 100µ dont le taux de matière grasse est inférieur à 1,5%/ matière sèche.

Traitement thermique pour obtention de la structure cristalline optimale. Les paramètres sont rapportés dans le tableau 3 ci-dessous.

Tableau 3

| | farine : 80µ <D0,5<120 |
|---|---|
| température cuiseur | 220 |
| débit matière | 100 Kg/h |
| % eau / débit matière | 8 |
| température sécheur | 220 |

La farine obtenue est broyée et/ou tamisée pour garantir une granulométrie comprise entre 80 et 120µ.

La farine "HF" présente les caractéristiques suivantes :

- un degré de gélatinisation de l'ordre de 37% (enthalpie farine HF/enthalpie farine native),
- une humidité comprise entre 4 et 11%,
- une granulométrie voisine de 120µ,
- une viscosité de 800 RVU mesurée par RVA.

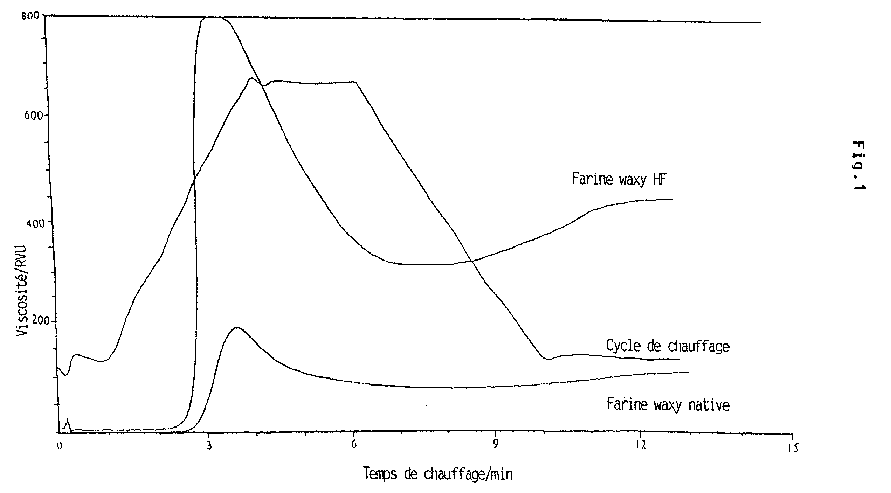

La figure 1 représente la mesure de la viscositée développée en fonction de la température, de la farine HF de cet exemple. La farine HF présente un développement de viscosité significativement supérieur (x 4) à celle de la farine waxy native non traitée thermiquement. Le gain de viscosité est conservé à l'issue du refroidissement.

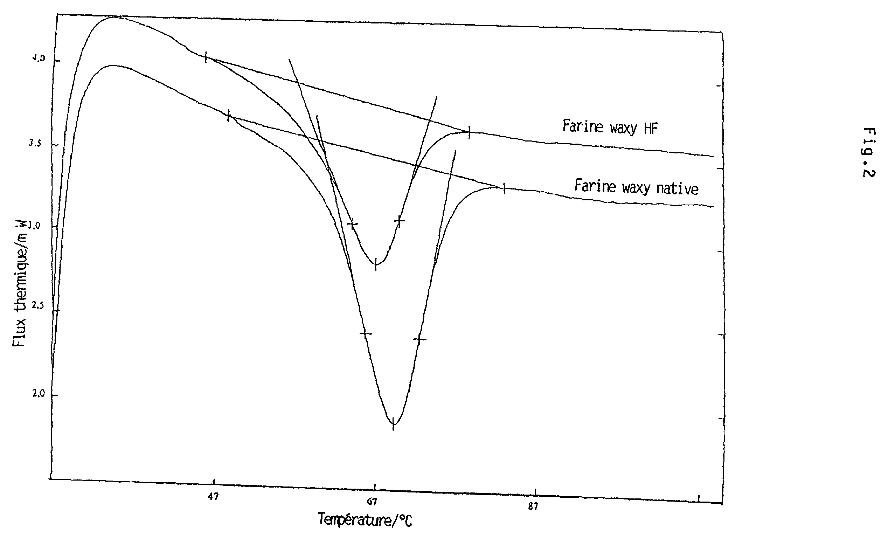

La figure 2 représente la mesure du degré de gélatinisation de la farine HF de cet exemple.

La farine waxy HF présente le degré de gélatinisation suivant :

$$1 - \{(6{,}11\ J/g) / (9{,}69\ J/g)\} \times 100 \approx 37\ \%$$

Les trois exemples ci-après d'utilisation de la farine de l'exemple 1 sont choisis pour illustrer les différentes utilisations et marchés cibles pouvant contenir la farine "HF"

- utilisation de la farine "HF" comme substitut de farine pour des applications de panification et de viennoiserie.
- utilisation de la farine "HF" comme substitut d'amidon natif pour des applications charcuterie
- utilisation de la farine "HF" comme substitut d'amidon modifié pour des applications sauces et plats cuisinés.

Exemple 2 : : Utilisation en panification et Viennoiserie (substitution de farine).

La formulation "Pain de mie" est rapportée dans le tableau 4 ci-dessous.

Tableau 4

| | Témoin en % | "HF" en % |
|---|---|---|
| farine de blé type 55 | 100 | 95 |
| farine "HF" "jaune" | - | 5 |
| eau | 62 | 65 |
| sucre | 4 | 4 |
| matière grasse | 3 | 3 |
| levure | 3 | 3 |
| sel | 1 | 1 |
| propionate de calcium | 0,5 | 0,5 |

L'eau est ajoutée après mélange à sec. Le pétrissage est effectué dans un premier temps à vitesse lente pendant 5 minutes puis à vitesse rapide pendant 10 minutes. La pâte obtenue est laissée reposée pendant une période de 15 minutes avant d'être boulée puis divisée. Les boules de 400g sont pesées et mises en moule. La fermentation va durer 90 minutes à 30°C suivie de l'étape de cuisson à 200°C pendant 25 minutes. Après ressuage, les pains sont démoulés, tranchés puis stockés. Les pains sont évalués à J + 10 jours sur des critères de moelleux par mesure de la résistance à la compression (technique de pénétrométrie) et par un jury d'analyse sensorielle évaluant le moelleux au toucher et le moelleux en bouche. Les résultats de ces analyses sont rapportés dans le tableau 5 ci-dessous.

Tableau 5

| Evaluation à J+10 | Témoin | "HF" |
|---|---|---|
| Analyse sensorielle : | | |
| - moelleux au toucher<br>- moelleux en bouche | 5/10<br>4/10 | 7/10<br>6/10 |
| Analyse par pénétrométrie : | | |
| - élasticité<br>- compression | 40<br>79 | 38*<br>72 |

* non significativement différent

L'utilisation de la farine "HF" permet, même à des faibles concentrations, de limiter la rétrogradation et d'améliorer la perception de moelleux et donc de prolonger la durée de conservation. Des concentrations supérieures sont réalisables avec de très bons résultats, en complémentant le cas échéant la formulation par du gluten pour ne pas pénaliser les qualités de pâte.

<u>Exemple 3 : Applications Charcuterie (substitution d'amidon natif).</u>

Une formulation de saucisses pour choucroute stérilisée est rapportée dans le tableau 6 ci-dessous.

Tableau 6

| | Témoin en % | "HF" en % |
|---|---|---|
| viande de porc séparée mécaniquement | 10 | 10 |
| purée de Couenne | 5 | 5 |
| boeuf fabrication | 18 | 18 |
| jarret de porc | 12 | 12 |
| gras dur | 30 | 30 |
| glace | 19 | 19 |
| caséinates | 1 | 1 |
| sel nitrité | 1,8 | 1,8 |
| phosphates | 0,3 | 0,3 |
| tradirose | 0,4 | 0,4 |
| épices | 0,5 | 0,5 |
| fécule de pomme de terre | 3 | - |
| farine "HF" "jaune" | - | 2 |

Les ingrédients secs et la glace sont incorporés dans une grande "cutter" auxquels le gras est progressivement incorporé pour créer l'émulsion. 10 tours de cutter sont nécessaires pour arriver à un cutterage classique des pâtes fines. La pâte présente alors une température voisine de 10°C. Elle est ensuite poussée à travers un boyau Nojax de 22 mm et portionnée. L'étape de cuisson est réalisée en plusieurs cycles pré-cuisson, fumage, cuisson et douchage.

Les saucisses sont alors mises en bocaux avec la choucroute à pH acide (~ 4) puis stérilisées pendant 30 minutes à 115°C.

Les saucisses sont évaluées à J + 10 jours sur des critères de tenue d'émulsion, de rendement technologique permettant de visualiser la perte de poids, l'apparence et la texture en bouche. Les résultats de cette évaluation sont rapportés dans le tableau 7 ci-dessous.

Tableau 7

| Evaluation à J+10 | Témoin | "HF" |
|---|---|---|
| Mise en oeuvre et tenue de l'émulsion | = | = |
| Apparence | = | = |
| Rendement après stérilisation : = (m. après - m avant)/m. avant | 105 | 106* |
| Analyse sensorielle<br>- fermeté au toucher<br>- fermeté en bouche | <br>5/10<br>5/10 | <br>8/10<br>7/10 |

* non significativement différent

L'utilisation de la farine "HF", permet même à des faibles concentrations d'apporter une viscosité finale à la saucisse identique à la viscosité développée par un amidon natif. De plus, cette farine hautement fonctionnelle permet de mieux résister aux 2 traitements thermiques successifs (cuisson + stérilisation) dans un environnement acide défavorable. Les mêmes rendements sont obtenus, mais surtout, la farine "HF" apporte un gain de fermeté, principal critère de qualité recherché pour les saucisses à pâte fine.

Exemple 4 : Applications Sauces et Plats cuisinés (substitution d'amidon modifié).

Une formulation "Sauce béchamel" est rapportée dans le tableau 8 ci-dessous.

Tableau 8

| | Témoin en % | "HF" en % |
|---|---|---|
| farine de blé type 55 | 3 | 3 |
| amidon modifié | 5 | - |
| farine "HF" "blanc" | - | 8 |
| sel | 0,8 | 0,8 |
| beurre | 4,5 | 4,5 |
| crème épaisse | 6 | 6 |
| acide lactique | 0,2 | 0,2 |
| eau | qsp 100 | qsp 100 |

Les ingrédients secs sont mélangés ; l'eau, le beurre et la crème sont ensuite ajoutés. L'acide lactique est également apporté pour corriger le pH. Le mélange est ensuite chauffé jusqu'à ébullition. Une seconde étape de cisaillement, réalisée avec un homogénéisateur type Silverson (SL2T) pendant 2 minutes à 4000 rpm, est également réalisée avec pour objectif de mimer les contraintes de cisaillement imposées dans les installations industrielles. La sauce Béchamel est mise en pot et pasteurisée 1 heure à 100°C à l'aide d'un pasteurisateur.

Les sauces sont évaluées à J + 10 jours sur des critères de viscosité par mesure de viscosité Brookfield et par un jury d'analyse sensorielle évaluant la texture en bouche et la couleur. Les résultats de ces analyses sont rapportés dans le tableau 9 ci-dessous.

Tableau 9

| Evaluation à J+10 | Témoin | "HF" |
|---|---|---|
| Couleur de la sauce | = | = |
| Absence de rétrogradation et de synérèse | = | = |

Tableau 9 (suite)

| Evaluation à J+10 | Témoin | "HF" |
|---|---|---|
| Viscosité Brookfield avant pasteurisation | 30 000 cp (aig n°3 1,5 rpm) | 29000 cp* (aig n°3 1,5 rpm) |
| Viscosité Brookfield après pasteurisation | 30 000 cp (aig n°3 1,5 rpm) | 27500 cp* (aig n°3 1,5 rpm) |
| Analyse sensorielle - couleur - texture en bouche | sauce blanche 8/10 | sauce blanche 8/10 |
| Décalaration d'Ingrédient | ADDITIF E1422 | INGREDIENT |

* non significativement différent

L'utilisation de la farine "HF", bien que légèrement moins résistante aux traitements de cisaillement suivi d'un traitement thermique par rapport à des amidons modifiés réticulés (et stabilisés) permet de développer une sauce avec la même viscosité. Le produit obtenu présente une texture fluide non rétrogradée, homogène lisse et parfaitement reproductible. Du fait de l'utilisation d'une variété blanche au départ, la sauce est blanche. Aucune différence de texture n'est perçue par le jury d'analyse sensorielle. Dans cet exemple, la farine "HF" permet à fonctionnalités égales de bénéficier d'une allégation "INGRÉDIENT" et non "ADDITIF", critère recherché par les consommateurs.

## Revendications

**1.** Procédé de préparation d'une farine fonctionnelle du type comprenant la préparation, à partir de grains de maïs waxy, d'une farine de départ de granulométrie définie et contenant le moins de matière grasse possible pour en garantir la neutralité, **caractérisé en ce que** :

- l'on soumet ladite farine à un traitement hydrothermique puis à un séchage à des températures comprises entre 210 et 250 °C et de préférence de l'ordre de 215, 220 ou 230°C, pendant une durée inférieure à environ 5 minutes, et
- l'on broie modérément et tamise la farine issue de l'étape précédente.

**2.** Procédé selon la revendication 1, **caractérisé en ce que** le traitement hydrothermique et le séchage sont réalisées par mise en suspension de la farine de départ en haute turbulence dans un courant d'air chauffé et en contact permanent avec une surface également chauffée, en apportant de l'eau ou de la vapeur, avec les principaux paramètres suivants :

- un débit de matière (farine de l'étape 2) de l'ordre de 100 à 200 Kg/h;
- un débit eau calculé pour apporter de l'ordre de 2 à 20% d'eau par rapport au débit matière;
- des températures de cuisson et de séchage comprises entre 210 et 250 °C et de préférence de l'ordre de 215, 220 ou 230°C;
- une durée de traitement hydrothermique et de séchage inférieure à environ 5 minutes.

**3.** Procédé selon l'une quelconque des revendications 1 ou 2, **caractérisé en ce que** la farine de départ est préparée à partir de grains d'une ou plusieurs variétis de maïs waxy contenant 100% d'amylopectine.

**4.** Procédé selon l'une quelconque des revendications 1 ou 3, **caractérisé en ce que** la farine de départ est préparée à partir de grains d'une ou plusieurs variétés de maïs waxy dentés et/ou cornés dentés, de préférence des variétés blanches à jaunes.

**5.** Farine obtenue par un procédé selon l'une quelconque des revendications 1 à 4.

**6.** Farine selon la revendication 5, **caractérisée en ce qu'**elle présente un degré de gélatinisation de l'ordre de 20 à 95%, de préférence de 30 à 70%, une humidité comprise entre 4 et 11%, une D50 comprise entre 75µ et 150µ et de préférence entre 115µ et 125µ et développant une viscosité à chaud entre 700 et 900RVU.

**7.** Utilisation d'une farine selon l'une quelconque des revendications 5 ou 6 pour la fabrication de produits alimentaires.

**8.** Utilisation selon la revendication 7, pour la fabrication de snacks et autres produits extrudés, de produits alimentaires de biscuiterie, de panification et de viennoiserie, de charcuterie, d'aliments pour animaux, de sauces et plats cuisinés, de produits laitiers, de batters.

**9.** Produits alimentaires tels que snacks et autres produits extrudés, produits alimentaires de biscuiterie, de panification, de viennoiserie, de charcuterie, d'aliments pour animaux, de sauces et plats cuisinés, de produits laitiers, de batters, à base de farine selon l'une des revendications 5 ou 6.

## Patentansprüche

**1.** Verfahren zur Herstellung eines zweckmäßigen Mehls der Art, dass es die Herstellung eines Ausgangsmehls, ausgehend von waxy Maiskörnern, mit definierter Kornklassierung und mit einem möglichst niedrigen Fettgehalt zur Gewährleistung der Neutralität beinhaltet, **dadurch gekennzeichnet, dass**:

- man das besagte Mehl einer hydrothermischen Bearbeitung mit anschließender Trocknung bei Temperaturen von zwischen 210 und 250°C und bevorzugt in der Größenordnung von 215, 220 oder 230°C, mit einer Dauer unterhalb von ungefähr 5 Minuten, unterzieht und
- man das aus dem vorhergehenden Schritt erhaltene Mehl leicht zerstößt und siebt.

**2.** Verfahren nach dem Anspruch 1, **dadurch gekennzeichnet, dass** die hydrothermische Bearbeitung und die Trocknung durch Suspension des Ausgangsmehls mit hoher Wirbelströmung in einem geheizten Luftstrom und mit permanentem Kontakt mit einer ebenfalls geheizten Oberfläche, mit Eintrag von Wasser oder Dampf, mit den folgenden Hauptparametern durchgeführt werden:

- einer Materiedurchflussleistung (Mehl des 2. Schrittes) von der Ordnung von 100 bis 200 Kg/h;
- einer Wasserdurchflussleistung berechnet für den Eintrag von größenordnungsmäßig 2 bis 20 % Wasser bezogen auf die Materiedurchfluss-leistung;
- den Temperaturen des Kochens und der Trocknung von zwischen 210 und 250°C und bevorzugt in der Größenordnung von 215, 220 oder 230°C;
- einer Dauer der hydrothermischen Behandlung und der Trocknung unterhalb von ungefähr 5 Minuten.

**3.** Verfahren nach einem der Ansprüche 1 oder 2, **dadurch gekennzeichnet, dass** das Ausgangsmehl aus Körnern einer oder mehrerer Sorten von waxy Mais, welches 100 % Amylopektin beinhaltet, hergestellt wird.

**4.** Verfahren nach einem der Ansprüche 1 oder 3, **dadurch gekennzeichnet, dass** das Ausgangsmehl aus Körnern einer oder mehrerer Sorten von gezahntem oder/und gehornt gezahntem waxy Mais, bevorzugt der weißen bis gelben Sorten, hergestellt wird.

**5.** Mehl, erhalten durch einen Prozess nach einem der Ansprüche 1 bis 4.

**6.** Mehl, erhalten nach dem Anspruch 5, **dadurch gekennzeichnet, dass** es einen Gelatinisierungsgrad von ordnungsgemäß 20 bis 95 %, bevorzugt von 30 bis 70 %, eine Feuchtigkeit von zwischen 4 und 11 %, eine D50 von 75 µ bis 150 µ und bevorzugt von 115 µ bis 125 µ und eine beim Erhitzen entstehende Viskosität von 700 bis 900 RVU aufweist.

**7.** Anwendung eines Mehls nach einem der Ansprüche 5 oder 6 für die Herstellung von Nahrungsmitteln.

**8.** Anwendung nach dem Anspruch 7 für die Herstellung von Snacks und anderem Spritzgebäck, Nahrungsmitteln der Keksproduktion, Brotprodukten und Hefe- und Blätterteiggebäck, Wurstwaren, Tiernahrung, Soßen und Fertiggerichten, Milchprodukten, Battern.

**9.** Nahrungsmittel wie Snacks und anderes Spritzgebäck, Nahrungsmittel der Keksproduktion, Brotprodukte, Hefeund Blätterteiggebäck, Wurstwaren, Tiernahrung, Soßen und Fertiggerichte, Milchprodukte, Battern, auf Mehlbasis nach einem der Ansprüche 5 oder 6.

## Claims

**1.** Method of preparation of a functional flour of the type comprising preparation, using waxy corn grains, of a starting flour of defined granulometry and containing the least amount of fat possible in order to guarantee its neutrality, **characterised in that**:

- the said flour is subjected to a hydrothermic treatment then to drying at temperatures between 210 and 250 °C and more preferably around 215, 220 or 230 °C, for a duration of less than about 5 minutes, and
- the flour resulting from the previous step is moderately ground and sifted.

**2.** Method according to claim 1, **characterised in that** the hydrothermic treatment and drying are carried out by suspending the starting flour in high turbulence in a heated current of air and in constant contact with a surface that is also heated, by adding water or steam, with the following principle parameters:

- a flow of matter (flour from step 2) of approximately 100 to 200 Kg/h;
- a flow of water calculated to add approximately 2 to 20% water in relation to the flow of matter;
- cooking and drying temperatures between 210 and 250 °C and more preferably around 215, 220 or 230 °C;
- a duration of hydrothermic treatment and drying less than about 5 minutes.

**3.** Method according to any of claims 1 or 2, **characterised in that** the starting flour is prepared using grains from one or several varieties of waxy corn containing 100% amylopectin.

**4.** Method according to any of claims 1 or 3, **characterised in that** the starting flour is prepared using grains from one or several varieties of dent and/or flint dent waxy corn, more preferably white to yellow varieties.

**5.** Flour obtained by a method according to any of claims 1 to 4.

**6.** Flour according to claim 5, **characterised in that** it shows a degree of gelatinization of approximately 20 to 95%, more preferably 30 to 70%, moisture content between 75µ and 150µ and more preferably between 115µ and 125µ and developing a viscosity while hot between 700 and 900 RVU.

**7.** Use of a flour according to any of claims 5 or 6 for the manufacture of food products.

**8.** Use according to claim 7, for the manufacture of snacks and other extruded products, food products of biscuit, bread, and Viennese pastries, of delicatessen, food for animals, pre-cooked dishes and sauces, dairy products, batters.

**9.** Food products such as snacks and other extruded products, food products of biscuit, bread, and Viennese pastries, of delicatessen, food for animals, pre-cooked dishes and sauces, dairy products, batters, with a flour base according to any of claims 5 or 6.

Fig.1

Farine waxy HF
Cycle de chauffage
Farine waxy native
Temps de chauffage/min
Viscosité/RVU
0
3
6
9
12
15
200
400
600
800

Fig.2

Farine waxy HF
Farine waxy native
47
67
87
Température/°C
4.0
3.5
3.0
2.5
2.0
Flux themique/m W